(19) **Europäisches Patentamt**

**European Patent Office**

**Office européen des brevets**

(11) **EP 1 004 333 A1**

(12) **EUROPEAN PATENT APPLICATION**

(43) Date of publication:
**31.05.2000 Bulletin 2000/22**

(51) Int. Cl.[7]: **A63B 53/04**, B23P 11/02,
B21D 22/02, F16B 1/00

(21) Application number: **98122160.9**

(22) Date of filing: **25.11.1998**

(84) Designated Contracting States:
**AT BE CH CY DE DK ES FI FR GB GR IE IT LI LU
MC NL PT SE**
Designated Extension States:
**AL LT LV MK RO SI**

(71) Applicants:
- **Hsu, Shu-En
  Win-Shan, Taipei (TW)**
- **Yeh, Ming-Tarng
  Hsin-Tien, Taipei Hsien (TW)**
- **Tai, Yun-Cherng
  Tao-Yuan Hsien (TW)**

(72) Inventors:
- **Hsu, Shu-En
  Win-Shan, Taipei (TW)**
- **Yeh, Ming-Tarng
  Hsin-Tien, Taipei Hsien (TW)**
- **Tai, Yun-Cherng
  Tao-Yuan Hsien (TW)**

(74) Representative:
**Casalonga, Axel et al
BUREAU D.A. CASALONGA - JOSSE
Morassistrasse 8
80469 München (DE)**

(54) **Super-elastic golf head made of shape memory alloys and its manufacturing process and apparatus**

(57) A super-elastic golf head (SEGH) is provided. This SEGH is made of Ni-Ti based shape memory alloy (Ni-Ti SMA) and possesses a super-elastic striking plate inlaid into and constrained by a groove frame of itself. Ni-Ti SEGH is a revolutionary product, which reveals a larger sweet area and can strike a ball flying far more away and reduce the falling dispersion area of golf balls. This inlaid and constrained structure of SEGH, is a non-welding or non-melting process, not only reinforce the super-elastic functions but also simplify the manufacturing process of the golf head. According to application, both super-elasticity and shape memory effect of Ni-Ti SMA can be strenthened and adjusted by a precise thermal-mechanical process and adding elements of V, Co, Cr, Cu, Fe, ...... etc.

FIG. 6G

EP 1 004 333 A1

**Description**

BACKGROUND OF THE INVENTION

The present invention relates to the manufacturing technique of a golf head, and more particularly to an adoption of Ni-Ti based shape memory alloys (Ni-Ti SMAs), through specific manufacturing and thermal-mechanical process, to produce golf head which possesses extraordinary super-elastic and shape memory properties. The manufacturing method and apparatus of the super-elastic golf head are to be described also.

So far as the progression of the material science and technology, various advanced materials and technics are adopted to the manufacturing sports implements or articles, in order to enhance the skill of art for sportsman and to enjoy their pleasure as well. The golf is one of the sports possessing both of the purposes of relaxation and healthiness for human body, thus, its participants are increasing constantly so as the variety of the scientific sports supplies which attract the consumers in the market. Regarding to the manufacturing of a golf head, many advanced materials such as aluminum alloys, stainless steel, titanium alloys and superalloys which have been used in national defence and aero-space industrial are adopted to the design and manufacturing of the golf head which has the main purposes set forth as follows:

a) the enhancement of the rigidity and elasticity of the golf head that a similar strike enables a golf ball flying further relative to a conventional golf head,

b) the reduction of the relative structural weight and drag of the golf head so as to effectively control the striking accuracy by applying a minimum physical strength, and

c) simplifying and minimizing the manufacturing process so as to speed up the manufacturing capability for achieving to the mass production of the golf head.

Accordingly, a qualified designer of sports supplies should consider and make the best accommodation among the selection of materials, the structural outline and the aerodynamics in designing and manufacturing a golf head. Therefore, the economical consideration is less important at all.

Further, the shape memory alloy is of a very special functional material which adapts itself to the changing temperature to induce a thermal-elastic Martensitic transformation. The process of this phase transformation is reversible, when the shape memory alloy is cooling gradually from a high temperature to a Martensite start temperature (Ms), the material begins to transform from a high temperature phase (defined: Austenite) to a low temperature phase (defined: Martensite), vice versa. However, always keep a specific crystal orientation relationship between the two phases; If this Martensite phase is subjected to an external stress, a strain is occurred against it. Yet, this type of strain is different from the strain of the lattice slipping and induce dislocations in the conventional material as it is subject to an external stress. But it is the result of self-accommodation among variants within the Martensite phase and the specific crystal orientation relationship still consisting; when the alloy is heating to a temperature of finish of reverse transformation of Martensite (Af), the low temperature phase is totally transformated back to its original high temperature phase, it is otherwise restoring to its original shape. Thus, through an entirely inspection on the outer shape of the material, its seems possessing a shape memory effect on temperature. That is why this material is called "shape memory alloy". The Ni-Ti shape memory alloy has been found by U.S. Naval Ordnance Lab. in 1963. Until now and among the variety of shape memory alloys, the Ni-Ti based shape memory alloy have the most stable properties on physics and chemistry, therefore, it is the one of the best of all.

SUMMARY OF THE INVENTION

The present invention has a main object to provide a super-elastic golf head made of shape memory alloys and its manufacturing process and apparatus, wherein the shape memory alloys is the most important part of this disclosure which through a specific manufacturing process and thermal-mechanical treatment, enables to design and produce a Ni-Ti based alloy plate having super elastic and shape memory properties. Such super-elasticity and shape memory effect are designed and applied to the striking plate of a golf head for producing a super-elastic striking face capable of striking a golf ball flying further and lessening the falling dispersion area of the ball and enlarging the sweet area of the plate of golf head. In addition, the memorability enables to constitute a strong tightly inlaid structure without welding, thus, enhancing the super-elastic effect of the striking plate and simplify the manufacturing process of the golf head. It is therefore an economical and effective design for golf applications.

Every shape memory alloys which usually have the property of super-elasticity, shape memory effect and high damping capacity, if wants to obtain their expectant objective and property, you have to consider the following principles:

First, accurate formulary - take the Ni-Ti based shape meomry alloys for instance, one can judge the property mostly from the height or low of the MS transformation temperarure. But the MS temperature is deeply influenced on its ingredient. Only 0.1 at % Ni variation, causes about 10°C deviations. If minimum 3d-metal is added or it is contaminated with very little oxygen and carbon, the influence will be greater.

Secondly, precise thermal-mechanical treatment (TMT) - the condition of the TMT process includes the soaking temperature control, the amount and temperature of the plastic forming and the control of cooling or heating rate during heat treatment. Among ordinary shape memory alloys, their shape-memory effect is separated with their super-elasticity, therefore, those having good Pseudo-elasticity (ie, super-elasticity) must lack of shape memory effect. Contrarily, those having strong shape memory effect has no Pseudo-elasticity at all, In order to obtain expectant property and result, the precise handling of a TMT process is absolutely necessary.

The present invention will become more fully understood by reference to the following detailed description thereof when read in conjunction with the attached drawings.

BRIEF DESCRIPTION OF THE DRAWINGS

Figure 1 is a schematic diagram illustrating the stress-strain curve of the Ni-Ti SMA alloy under tensile test, stress-induced Martensite happened, which is changing from Austensite phase to Martensite phase when the stress is applied and changing reversely from Martensite phase to Austensite phase when the stress is released,

Figure 2 indicating the metallographic structure of the super-E alloy plate along the rolling direction,

Figure 3 is a diagram indicating the stress-strain curve from the super-E and Ni-Ti based shape-memory alloy under tensile test,

Figure 4 is a front view to show an equipment of concaving test for super-elasticity,

Figure 5A is a diagram indicating the load-deflection curve of a 17-4PH stainless steel plate under concaving test.

Figure 5B is a diagram indicating the load-deflection curve of a Ti-6A1-4V alloy plate under concaving test,

Figure 5C is a diagram indicating the load-deflection curve of a Ni-Ti SMA plate under concaving test,

Figure 5D is a diagram indicating the load-deflection curve of a super-E alloy plate under concaving test,

Figure 6A is a sectional view illustrating a frozen super-elastic alloy plate 601 before pressing and shearing process by upper mould 61, upper punching die 62, lower mould 63 and lower seat die 64,

Figure 6B is a sectional view illustrating a frozen super-elastic alloy plate deformed into an arc shape under pressing process, the inner and outer surface of the arc shape in which happened compressive and tensile deformation respectively,

Figure 6C is a sectional view illustrating a frozen super-elastic alloy plate under shearing process,

Figure 6D is a sectional view illustrating a super-elastic striking plate after pressing and shearing process and remaining in arc shape at low temperature,

Figure 6E is a side view and partially sectional view to show a body 603 of golf bead with a groove 604 machined,

Figure 6F is a side view and partially sectional view to show the super-elastic striking plate of Fig. 6D setting to the groove of the body of Fig. 6E,

Figure 6G is a side view and partially sectional view to show the super-elastic striking plate of Fig. 6D inlaid into the groove of the body of Fig. 6E and became flat after restored by shape memory property at a normal room temperature,

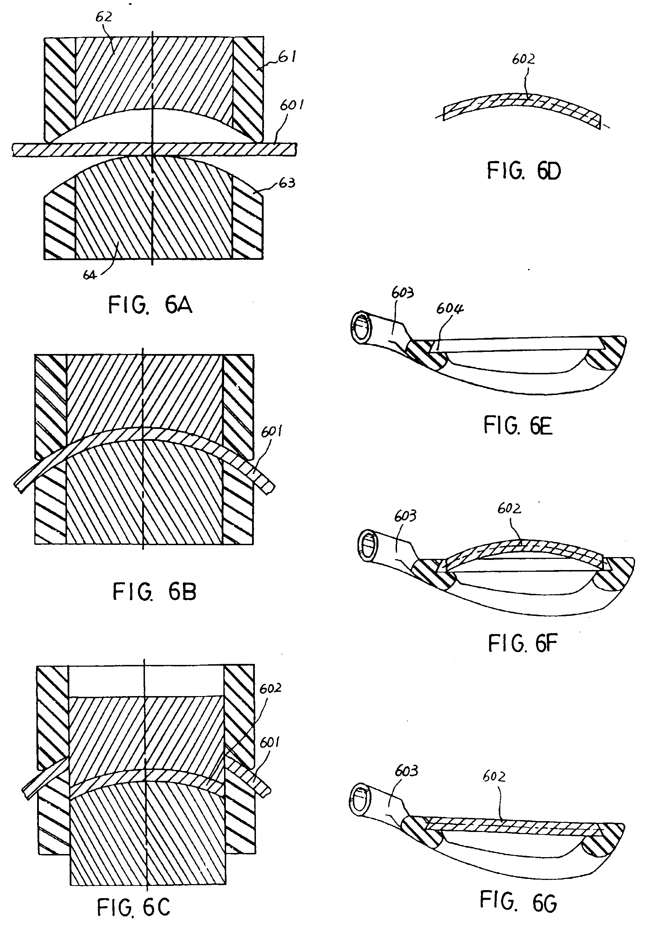

Fiure 7 is a diagram indicating the load-deflection curves of concaving test with and without 0.4mm interference for the super-elastic striking plate mounted as the procedures in Fig. 6,

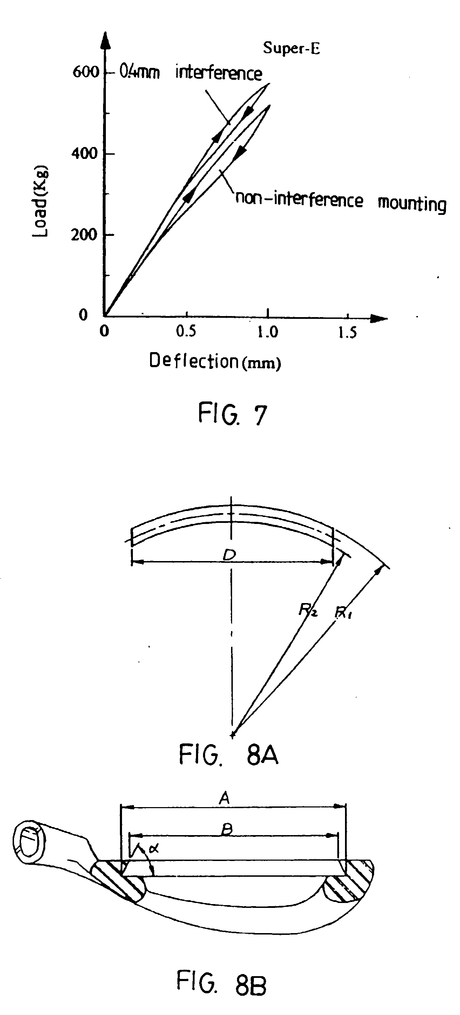

Figure 8A is a diagram indicating the dimension of the the super-elastic striking plate which will be mounted on the body of golf head by shape memory effect, and

Figure 8B is a section view to show the dimension of the groove of the golf head.

DETAILED DESCRIPTION

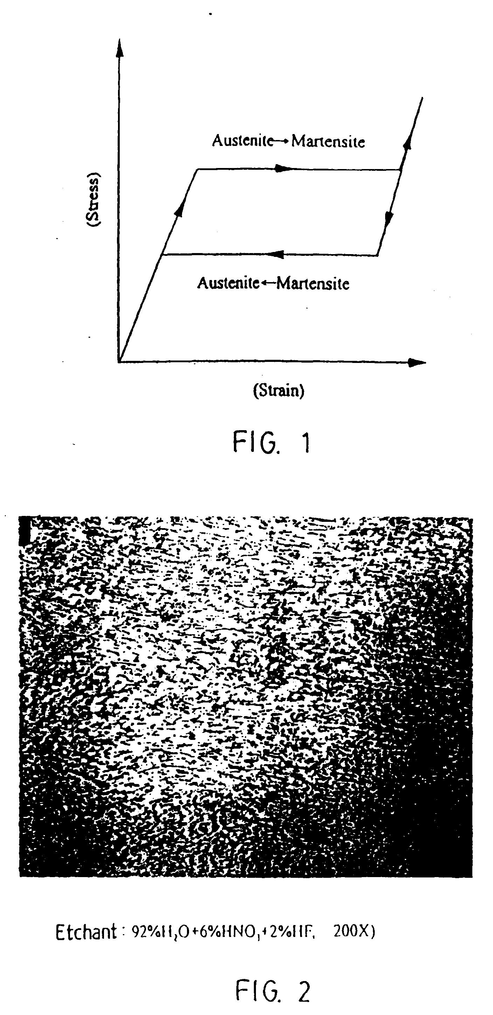

With reference to Fig. 1 of the drawings, which is a schematic diagram indicating the transformation curve of the super-elastic stress and strain of the Ni-Ti based shape memory alloy of the present invention, when a stress is applied, it becomes from Austensite phase to Martensite phase and when the stress is released, it becomes reversely from the Martensite phase to the Austensite phase. However, the intensity of the super-elasticity is almost a constant during the above transformation process. Following is the method of manufacturing the Ni-Ti super-elastic alloy plate:

1) the Ni-Ti binary shape memory alloy contains the Nickel of about 49.0 ~ 52.0 atomic percentage. It is composed of high purity Nickel ( $\geq$ 99.8 % ) and Titanium ( $\geq$ 99.5 % ) of required proportions under control of it Ms transformation temperature. If a room temperature super-elastic alloy is required, for instance, the Ms transformation temperature sets under frozen point or its Af point is about 0°C. The alloy is moulded to ingots by adoption of the vacuum arc melting or the vacuum arc remelting techniques. If a suitable amount of Vanadium, Cobalt, Chromium, Iron, etc., are added, for example: Ni(47 ~ 51) Ti(46 ~ 50) V(0 ~ 6) Co (0 ~ 3), and in cooperation with TMT process, this super-elastic alloy having a super-elastic strength higher than 700 MPa is produced. If a suitable amount of Copper, Chromium, Iron, etc., is added, for example: Ni(39 ~ 46) Ti(48 ~ 50) Cu(4 ~ 10) X(0 ~ 1), where X=Cr+Fe+Co, this super-elastic allloy having a super-elastic strength lower than 200 MPa is produced. Therefore, depending upon the substantial requirement, and

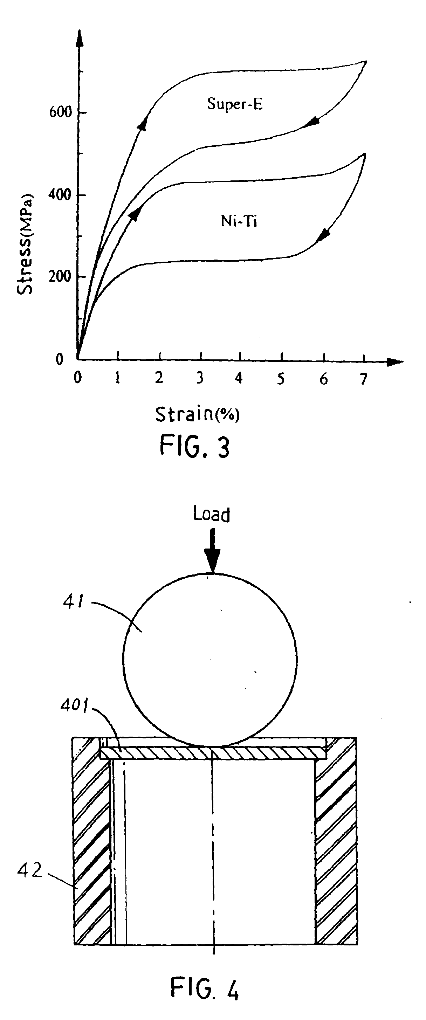

2) hot-roll the above alloy ingots into desired thickness under about 800 °C before operating cold rolling and thermal treatment, then the grains of the metallographic structure of the alloy appear slender and disperse along the rolling orientation (as shown in Fig. 2). The stress and strain curve of the tensile test appear clearly super-elasticity (as shown in Fig. 3). In addition, the Ni-Ti and Ni-Ti-V-Co alloys each have supper-elastic strength of about 400 and 700 MPa.

Referring to Fig. 4 which shows a circular plate 401 made from the Ni-Ti based super-elastic alloy of the present invention is under concaving test:

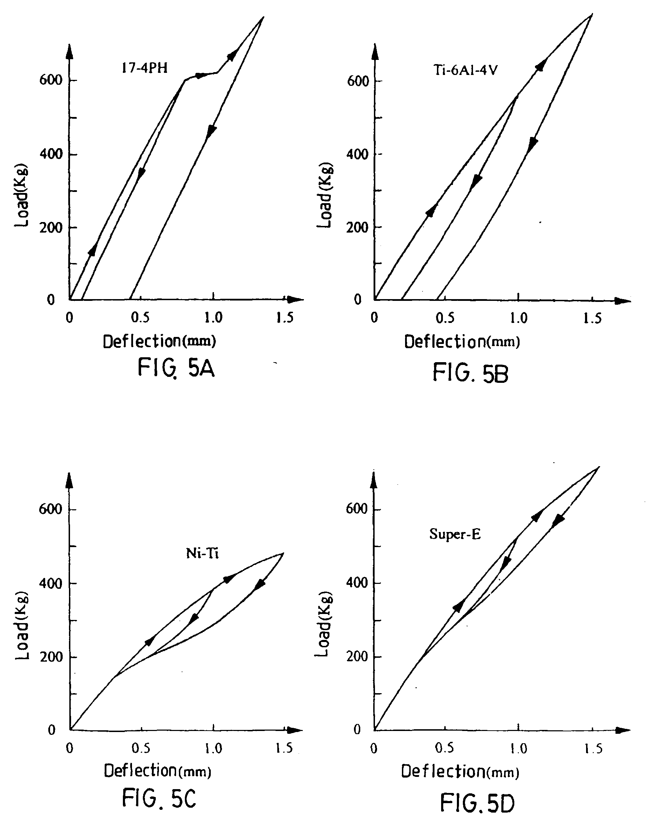

the above concaving test is adopted to simulate a condition of an impact occurred between the striking surface of the golf head and a golf ball. The loading head 41 adopted to this test has an outer diameter equal to that of the golf ball. A circular specimen 401 made respectively of 17-4PH stainless steel, Ti-6A1-4V Titanium alloy, Ni-Ti super-elastic alloy and Ni-Ti-V-Co super-elastic alloy has 2.7mm in thickness and 55mm outer diameter. This test takes place under room temperature and the loading head is concaving at a speed of 1mm/minute. Figs. 5A to 5D show different performance curves resulted respectively by the above four different materials during the concaving test. The concaving curve of the stainless steel has clearly the yielding point, when the concaving exceeds 0.5mm, it occurs appearantly the permanent deformation. The concaving curve of the Titanium alloy shows that this alloy has a little pseudo-elasticity, but it appears a permanent deformation either when the concaving exceeds 0.5mm; Ni-Ti and Ni-Ti-V-Co alloys appear no deformation when the concaving exceeds 1.5mm during the concaving test. The contact surface between the loading head and the specimen becomes greater in accompany with the increasing of the concaving movement, thus the super-elastic curves in Figs. 5A to 5D are not so perfect as it is in Fig. 3. However, in comparison with the above results, it is apparently that the Ni-Ti based super-elastic alloy is the potential candidate material to produce the striking plate of the golf head.

Referring to Figs. 6A to 6G which show the manufacturing process of the golf head, including the machining procedure of the super-elastic striking plate 602 and the inlaying it into body 603 of the the golf head:

The Ni-Ti super-elastic alloy plate 601 with high work hardening rate, high elastic modulus and strong rigidity, hard to machine by traditional cutting or blanking, and is not economical or practical with electrical arc cutting. However, if the super-elastic alloy plate 601 is frozen below Ms temperature (about -50 °C ) to become Martensite phase structure while it is appeared no super-elasticity but lowest strength. This time, it can be deformed or cut readily as a copper alloy. Fig. 6A shows a frozen super-elastic alloy plate 601 fed in the die set of the blanking machine. Fig. 6B shows the plate 601 being pressed into an arcuate shaped piece. Fig. 6C shows the arcuate shaped piece 601 being cut to an arcuate striking plate 602 of proper size (as shown in Fig. 6D) suitable to mount into a acute groove 604 of a machined golf head 603 (as shown in Fig. 6E). Fig. 6F shows the arcuate striking plate 602 being put on the groove 604 of the golf head and became flat and inlaid into the groove 604 after it is restored by shape memory property at a room temperature (as shown in Fig. 6G). The full procedures are non-welding process. If the striking plate 602 having a designed size just interfere with the groove 604 of the golf head body 603 and inducing permanently assembled force for enhancing the super-elasticity and strength of the striking plate.

Fig. 7 indicates that a Ni-Ti-V-Co circular alloy plate having 2.7mm thickness and 55mm outer diameter mounts to a SKD-11 steel mould 42 with 0.4mm interference. The super-elastic strength of the circular alloy plate has increased 10 percent during a concaving test.

Figs. 8A and 8B illutrates the blanking outer size of the striking plate 602 and its inlaying angle relative to the golf head. Following are the calculations:

1) press the frozen super-elastic alloy plate to an arcuate shape, the deformation of its convex and concave surface are

$$(R2-R1)/(R1+R2) \text{ and } (R1-R2)/(R1+R2), \text{ respectively.}$$

2) the blanked and flatted sizes of the striking plate are just equal to the acute groove sizes of the golf head body:

$$A=(R1+R2)\sin^{-1}(D/2\ R2)$$

$$B=(R1+R2)\sin^{-1}(D/2\ R1)$$

3) inlaying angle:

$$\alpha = \tan^{-1}[2(R1-R2)/(A-B)]$$

Following are the advantages of the present invention:

1) increasing flying distance - according to Newton's second law of motion, in the conditions of striking or impact, the product of the force received by a substance and the thrusting period thereof equals to the momentum obtained by the substance. This momentum equals to the product of its mass and speed. Therefore, under similar striking load, during the impacting moment of the super-elastic striking plate and the golf ball, the super-elastic concave thrust area will be larger than a conventional one. It is otherwise elongating the contact time between the striking plate and the golf ball in order to obtain greater momentum for increasing the flying distance of the golf ball,

2) enlarging the sweet area of the golf head and reducing the falling dispersion area of the flying golf ball - if the deflection of the striking plate exceeds a certain degree, its super-elastic strength almost becomes a constant. Therefore, any slight variations from the relative striking angle or the direction between the striking surface and the ball will cause a slight deviation on the partially net deflection of the super-elastic concave thrust area of the golf head, but almost unchange the result of the thrust force on the surrounding of the struck ball. So that it not only enlarges the sweet area for the golf head itself, but also reduces the falling dispersion area of a flying ball,

3) similar striking load may obtain different flying distance - if change the super-elastic strength on the striking plate, a similar striking load lay obtain different striking results. It is that the different momentum on the golf ball can be gained and yields different striking distances,

4) high damping effect (HDE) - Ni-Ti based shape memory alloy belongs to the twin-type damping alloy. Its damping factors are the thermal-elastic Martensite with high density twin-interfaces and the movable interfaces of the transformation. The density of these damping factors are high up to about several millions per square centi-meter. When the shock waves transmit to these interfaces, an incomplete energy transmission happen. Thus, Ni-Ti based shape memory alloy is a high damping material.

5) the super-elastic shape memory alloy can be adopted to produce other sports supplies such as the striking club, striking plate or other sports apparatus, and

6) the super-elastic golf head can be made entirely of the shape memory alloy or only that the striking plate thereof is made of the above alloy.

Note that the specification relating to the above embodiment should be construed as exemplary rather than as limitative of the present invention, with many variations and modifications being readily attainable by a person of average skill in the art without departing from the spirit or scope thereof as defined by the appended claims and their legal equivalents.

**Claims**

**1.**   A method of producing a super-elastic golf head comprising the steps of:

   providing a body of golf head having an acute groove in the front of said body; and inlaying a super-elastic striking plate into the groove of said body,
   said striking plate being made of Ni-Ti based shape memory alloy; characterized in that: inlaying assembly is a non-welding procedure, ie., just to simplify and minimize the manufacturing process of the golf head;
   said striking plate having a designed size just interfere with the groove of said body and inducing permanently assembled force for enhancing the super-elasticity and strength of said striking plate; and
   a super-elastic golf head can strike a golf ball flying further and decrease the falling dispersion area of a golf ball and enlarge the sweet area of said golf head.

**2.**   A method as recited in claim 1, wherein said Ni-Ti based shape mamory alloy modified through specific thermal-mechanical treatment and alloy design reveals outstanding super-elasticity and shape memory effects.

**3.**   A method as recited in claim 1, wherein said inlaying procedure further comprises the steps of:

frozen and concaved striking plate with a defined outline just blank from frozen super-elastic alloy plate;
putting the blanked plate on the acute groove of said body of golf head;
owing to the shape memory effects, concaved striking plate being gradually stretching during itself is warming up; and
stretched striking plate just interfere with said groove, while inlaying striking plate therein.

4. A blanking apparatus according to claim 3 said step further comprising:

pre-shaping the frozen super-elastic alloy plate by die sets: and blanking the pre-shaped frozen super-elastic alloy plate by punching dies so as to get a shaped plate with accurate outline.

FIG. 1

Etchant : 92%H₂O+6%HNO₃+2%HF, 200X)

FIG. 2

FIG. 3

FIG. 4

FIG. 5A

FIG. 5B

FIG. 5C

FIG. 5D

FIG. 6A

FIG. 6B

FIG. 6C

FIG. 6D

FIG. 6E

FIG. 6F

FIG. 6G

Super-E

600 — 0.4mm interference

Load(Kg)

400

200

non-interference mounting

0

0       0.5       1.0       1.5

Deflection(mm)

## FIG. 7

D

R2    R1

## FIG. 8A

A

B

α

## FIG. 8B

**European Patent Office**

**EUROPEAN SEARCH REPORT**

Application Number

EP 98 12 2160

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | US 5 807 189 A (MARTIN ET AL.) 15 September 1998 * the whole document * | 1,2 | A63B53/04 B23P11/02 B21D22/02 F16B1/00 |
| A | US 5 176 384 A (SATA ET AL.) 5 January 1993 * the whole document * | 1,2 | |
| A | DATABASE WPI Section Ch, Week 8506 Derwent Publications Ltd., London, GB; Class M26, AN 85-034864 XP002100464 & JP 59 228874 A (SUMITOMO ELECTRIC IND CO), 22 December 1984 * abstract * | 1,2 | |
| A | US 5 774 970 A (HUANG) 7 July 1998 * column 2, line 19 - column 3, line 38; figures 1-3 * | 1 | |
| A | US 4 049 151 A (SCHWEISO) 20 September 1977 * the whole document * | 3,4 | TECHNICAL FIELDS SEARCHED (Int.Cl.6) A63B B23P B21D F16B |
| A | GB 2 164 114 A (DZIECIELEWSKI) 12 March 1986 * page 1, line 79 - line 109; figures 1,2 * | 3 | |

-----

The present search report has been drawn up for all claims

| Place of search | Date of completion of the search | Examiner |
|---|---|---|
| THE HAGUE | 20 April 1999 | Williams, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 98 12 2160

This annex lists the patent family members relating to the patent documents cited in the above-mentioned European search report.
The members are as contained in the European Patent Office EDP file on
The European Patent Office is in no way liable for these particulars which are merely given for the purpose of information.

20-04-1999

| Patent document cited in search report | | Publication date | Patent family member(s) | | Publication date |
|---|---|---|---|---|---|
| US 5807189 | A | 15-09-1998 | AU 1418697 A | | 27-06-1997 |
| | | | WO 9720602 A | | 12-06-1997 |
| US 5176384 | A | 05-01-1993 | NONE | | |
| US 5774970 | A | 07-07-1998 | NONE | | |
| US 4049151 | A | 20-09-1977 | CA 1018468 A | | 04-10-1977 |
| | | | DE 2309784 A | | 11-07-1974 |
| | | | GB 1425991 A | | 25-02-1976 |
| | | | JP 1075747 C | | 25-12-1981 |
| | | | JP 49102480 A | | 27-09-1974 |
| | | | JP 56018462 B | | 28-04-1981 |
| | | | US 4001928 A | | 11-01-1977 |
| GB 2164114 | A | 12-03-1986 | NONE | | |

EPO FORM P0459

For more details about this annex : see Official Journal of the European Patent Office, No. 12/82